# EUROPEAN PATENT SPECIFICATION

(11) **EP 3 372 432 B1**
(45) Date of publication and mention of the grant of the patent: **18.09.2019**
(21) Application number: 18157553.1
(22) Date of filing: 20.02.2018
(51) Int. Cl.: B60K 13/04

(54) **VEHICLE BODY STRUCTURE WITH PURIFYING ADDITIVE INLET PIPE BRACKET ON SIDE MEMBER**
FAHRZEUGKÖRPERSTRUKTUR MIT REINIGUNGS-ADDITIV-EINLASS-ROHRHALTERUNG AM SEITENTEIL
CARROSSERIE DE VÉHICULE AVEC FIXATION SUR UNE PARTIE LATÉRALE POUR UN TUYAU D'ENTRÉE POUR ADDITIF DE PURIFICATION

(30) Priority: 03.03.2017 JP 2017040418
(43) Date of publication of application: 12.09.2018
(73) Proprietor: Mitsubishi Jidosha Kogyo Kabushiki Kaisha, Tokyo 108-8410 (JP); Mitsubishi Jidosha Engineering Kabushiki Kaisha, Aichi 444-8501 (JP)
(72) Inventor: Yamamoto, Masahiro, Tokyo, 108-8410 (JP); Sano, Takayuki, Tokyo, 108-8410 (JP); Inden, Kazuto, Okazaki-shi, Aichi, 444-8501 (JP); Shimasaki, Yoshifumi, Okazaki-shi, Aichi, 444-8501 (JP)
(74) Representative: Vossius & Partner Patentanwälte Rechtsanwälte mbB

(56) References cited:
- EP-A1- 1 852 298
- CN-U- 201 970 853
- DE-A1-102007 019 912
- DE-A1-102008 020 213
- DE-A1-102014 110 880
- JP-A- 2009 162 054
- US-A1- 2014 103 039

## Description

### FIELD

The present invention relates to a vehicle body structure provided with a filler neck that connects a tank to store an additive for purifying exhaust gas to a filler inlet.

### BACKGROUND

Some typical vehicles provided with an exhaust-gas purifying system that purifies exhaust gas have been known for mounting thereon tanks for an additive having a reduction function acting on the purifying target substance. Assuming that the purifying target substance is nitrogen oxide (NOx), an additive (reduction agent), such as urea solution or ammonia solution, is stored in the tank. The installing position of the tank is set to be, for example, beneath the floor of the vehicle. The filler inlet from which the additive is fed (supplied) to the tank is installed in the vicinity of the fuel inlet to feed the fuel. For example, if the fuel inlet is provided on the rear fender face, it is conceived that the filler inlet is provided also on the rear fender face as disclosed in Japanese Laid-open Patent Publication No. 2001-1105900 (hereinafter Patent Literature 1).

Here, the tank that stores an additive and the filler inlet are connected to each other via a filler neck including multiple pipes. In cases where, for example, a configuration in which the filler inlet is provided on the side-face panel (e.g., the rear fender face) on the vehicle and the tank is arranged between the left and right side members is adopted, the filler neck is bent from the side of the side member inwardly of the vehicle and routed under the side member (see the Patent Literature 1).

However, if the filler neck is routed through the side space of the side member on the side of the wheel, the filler neck has a high possibility of being easily damaged by pebbles being splashed by the wheel and impinging on the filler neck and by muddy water flung by the wheel and soiled on the filler neck. In addition to the above, since the wheel sometimes enter the side space, the filler neck is preferably routed distantly from the wheel and firmly held on the vehicle body in order to avoid a contact of the wheel with the filler neck.

The document DE 10 2014 110880 A1 discloses also a vehicle body structure of a vehicle comprising a side member that extends in a front-to-rear direction of the vehicle , a tank that is arranged under the side member in a vertical direction and that stores an additive for purifying an exhaust gas, a filler inlet for the additive that is arranged on an outer side from the side member and a filler neck that connects the filler inlet to the tank.

Furthermore the document CN 201 970 853 U shows a bent fuel pipe holder to be mounted on a structural part of a vehicle.

### SUMMARY

### TECHNICAL PROBLEMS

With the foregoing problems in view, one of the objects of the vehicle body structure of the present embodiment is to achieve holding and protecting of a filler neck without increasing requisite elements. In addition to the above object, effects and advantages that would be derived from the configuration of the following embodiment to be detailed below but that have not been attained from conventional technique can be regarded as other objects of the present invention.

### SOLUTION TO PROBLEMS

(1) The vehicle body structure disclosed herein includes a side member that extends in a front-to-rear direction of the vehicle; a tank that is arranged on an inner side from the side member in a width direction of the vehicle and that stores an additive for purifying an exhaust gas; a filler inlet for the additive that is arranged on an outer side from the side member; a filler neck that connects the filler inlet to the tank; and a holding member that is mounted on the filler neck and that is fixed to the side member at least one point to hold the filler neck to the vehicle. The filler neck is arranged along an inner wall of a wheel house from the filler inlet and includes a bend portion that is bent from a point under the wheel house and on a side of the side member to a point under the side member. The holding member extends between a wheel arranged inside the wheel house and the bend portion of the filler neck.
(2) Preferably, the holding member includes a front face portion that is vertically arranged on a front side of the bend portion and that extends along the width direction; and a lower face portion that is arranged under the bend portion.
(3) Preferably, the lower face portion of the holding member downwardly inclines toward the tank.
(4) Preferably, the vehicle body structure further includes a tank cover that covers a lower portion of the tank from a bottom. In this case, the holding member is arranged such that an end portion of the lower face portion on a side of the tank locates below a top edge of the tank cover and distantly from the tank cover.
(5) Preferably, the holding member is configured to be combination an upper member that is attached to the filler neck beforehand and a lower member arranged under the upper member; and the lower member is fixed to the side member and to the upper member.
(6) Preferably, the upper member and the lower member are fixed, being in a state where a lower end portion of the upper member overlies an upper end portion of the lower member from the outer side of the vehicle.

### ADVANTAGEOUS EFFECTS

According to the vehicle body structure disclosed herein, the filler neck can be firmly held on the side member because the holding member is mounted on the filler neck and is fixed to the side member. Since the holding member extends between the wheel and the bend portion of the filler neck, the filler neck (in particular, the bend portion thereof) can be protected. Consequently, the filler neck can be held and protected without increasing the requisite elements.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
FIG. 1 is a perspective view of a vehicle adopting a vehicle body structure according to a present embodiment;
FIG. 2 is a vertical sectional view of a wheel house of FIG. 1;
FIG. 3 is a schematic diagram illustrating a tank and a filler neck assembly of FIG. 1;
FIG. 4 is a simplified and enlarged side view illustrating a splash shield, seeing through a wheel house of FIG. 1;
FIG. 5 is an arrow view in the direction A of FIG. 4;
FIG. 6 is an arrow view in the direction B of FIG. 4; and
FIG. 7 is a sectional view along the line C-C of FIG. 4.

### DESCRIPTION OF EMBODIMENTS

Hereinafter, description will now be made in relation to a vehicle body structure of the present embodiment with reference to the accompanying drawings. The following embodiment is exemplary and does not intend to exclude various modification and application of technique not explicitly described in the following embodiment. The structures of the embodiment can be modified without departing from the scope of the invention as defined by the appended claims.

The following description defines the traveling direction of the vehicle as the front (vehicle front direction) and defines the opposite direction to the front as the rear (vehicle rear direction). The description also defines the direction of the gravity as the downward direction and defines the opposite direction as the upward direction. With respect to the left-to-right direction (vehicle width direction) of the vehicle, the description defines the compartment side (inner side of the vehicle width direction) as the "inner side" and defines the opposite direction thereto as the "outer side".

### [1. Structure]

### [1-1. Entire structure]

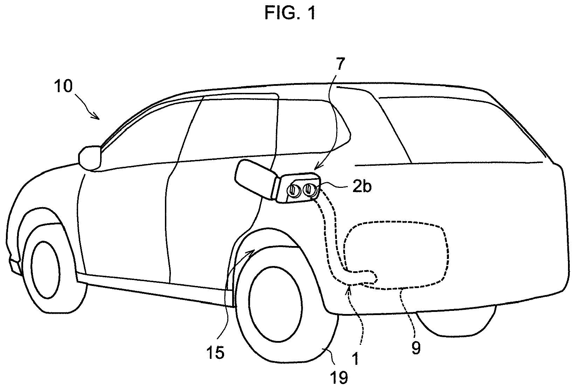

The vehicle body structure of the present embodiment is applied to a vehicle 10 shown in FIG. 1. A tank 9 is fixed to the vehicle body under a floor at the rear side of the vehicle 10. The tank 9 is a resin container that stores an additive (e.g., urea solution or ammonia solution; hereinafter referred to as "a reduction agent") used in a Urea Selective Catalytic Reduction System (urea SCR system) to purify the exhaust gas. On a left rear fender of the vehicle 10, a fuel inlet to feed (supply) fuel and a filler inlet 7 to feed (inject) the reduction agent are arranged adjacently to each other.

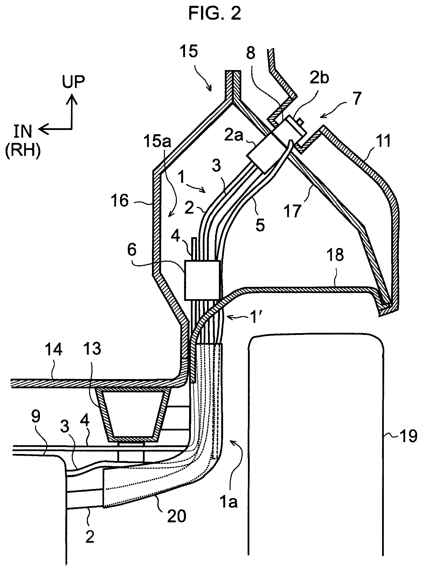

As illustrated in FIG. 2, the tank 9 is arranged between a pair of left and right side members 13 (vehicle body) extending along the front-to-read direction of the vehicle 10 (i.e., inner side of the side members 13) and under a rear floor panel 14 (vehicle body). The filler inlet 7 is fixed to a box-shaped casing attached to an outer panel 11 (vehicle body) forming the left rear fender via a boot 8 (attachment member). The boot 8 is an element to attach the filler inlet 7 to the vehicle body and is formed into a frustum of cone the bottom of which is opened. The tank 9 and the filler inlet 7 are connected to each other by a filler neck 1, which is configured to include multiple horses (pipes).

The filler neck 1 of the present embodiment includes a filler horse 2 (injection pipe) for injecting the reduction agent into the tank 9, a leveling pipe 3 that defines the upper limit of the liquid level for injecting the reduction agent into the tank 9, and a chamber 6 interposed in the leveling pipe 3. In addition to the above, a vent horse 4 (pressure release pipe) for maintaining the inner pressure of the tank 9 to be close to the atmosphere pressure and a drain horse 5 (exhaust pipe) for drainage of overflowing reduction agent from the filler inlet 7 to outside the vehicle 10 are provided to the filler neck 1 of the present embodiment. This means that in the vehicle 10 of the present embodiment, the vent horse 4 and the drain horse 5 in the state of being assembled are attached to the filler neck 1. Hereinafter, an integration formed by attaching the pipes such as the vent horse 4 and the drain horse 5 to the filler neck 1 with clips and engagement claws and the like is referred to as a filler neck assembly 1'.

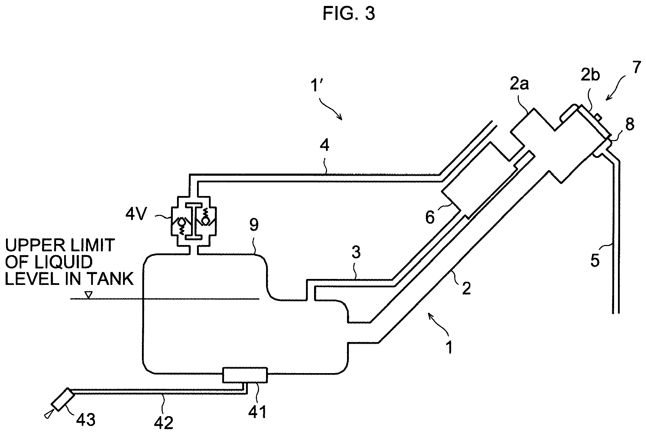

Here, description will now be made in relation to the tank 9 and the filler neck assembly 1' of the present embodiment with reference to FIG. 3. The upper end of the filler horse 2 is connected to a filler head 2a and the lower end thereof is connected to a side face of the tank 9. The filler head 2a is, for example, a stair-like element in the form of a cylinder having a closed bottom, and includes a penetrating hole to which the filler horse 2 is to be connected on the bottom having an enlarged diameter. Since the upper end of the leveling pipe 3 is also connected to the filler head 2a, another penetrating hole for the leveling pipe 3 is formed on the bottom of the filler head 2a.

The upper end side (i.e., the filler head 2a) of the filler horse 2 penetrates the top face of the boot 8 in the form of a frustum of cone and is opened to the opened bottom of the boot 8. Into the opening of the filler head 2a, an injection gun is inserted when the reduction agent is to be fed. The opening of the filler head 2a is closed with a cap 2b except when the feeding is take place. The boot 8 is placed on the filler neck 1 so as to cover the filler inlet 7 and also mounted on a hole (not illustrated) penetrating the side face of the vehicle body.

The upper end of the leveling pipe 3 is connected to the filler head 2a, the lower end thereof is connected to the upper portion of the tank 9, and is opened to the inside of the tank 9 at least at a position higher than the connection between of the filler horse 2 and the tank 9. The leveling pipe 3 functions as an airway (air releasing path) of the tank 9 when the reduction agent is being fed. The height position (vertical position) where the leveling pipe 3 is connected to the tank 9 corresponds to the upper limit of the liquid level of the reduction agent stored in the tank 9.

The chamber 6 is a hollow container that functions as a "liquid collector" that lets the reduction agent back-flowing through the leveling pipe 3 stay if the reduction agent is injected beyond the upper limit of the liquid level. In other words, the inside of the chamber 6 functions to store, when the reduction agent is further fed after the liquid level reaches the upper limit in feeding of the reduction agent, the exceeding reduction agent.

The lower end of the vent horse 4 is connected to a pressure release valve 4V, and the upper end thereof is released to the atmosphere in a wheel house 15 (see FIG. 2). The pressure release valve 4V functions to balance the inner pressure of the tank 9 with the outer pressure, keeping fluid-tight capability against the reduction agent stored inside the tank 9 and external moisture. An example of the position of the pressure release valve 4V is set to be close to the topmost portion of the tank 9 so that the pressure release valve 4V is not sank below the liquid level even if the posture of the vehicle body inclines.

The upper end of the drain horse 5 is connected to the boot 8 and the lower end thereof is downwardly released to the atmosphere in the wheel house 15. In case where the reduction agent overflows from the filler horse 2 and the leveling pipe 3 when being fed, the overflowing reduction agent is collected into the boot 8. The drain horse 5 lets the reduction agent collected in the boot 8 flow.

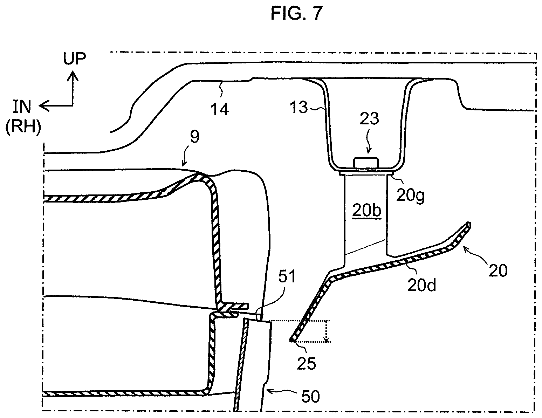

As illustrated in FIG. 3, the reduction agent stored in the tank 9 is drawn up by a pump 41 at appropriate timing according to the operating state of an engine mounted on the vehicle 10 and supplied to an injector 43 through a reduction agent pipe 42. The injector 43 is arranged at the upstream side of a selective NOx reducing catalyst (not illustrated) interposed in an exhaust gas path (not illustrated). Furthermore, as illustrated in FIG. 7, the vehicle 10 of the present embodiment is provided with a tank cover 50 that covers the lower portion of the tank 9 from the bottom thereof. The tank cover 50 is a protector element that inhibits chipping abrasion and deformation caused by pebbles splashed on the road and also inhibits fouling caused by mud water.

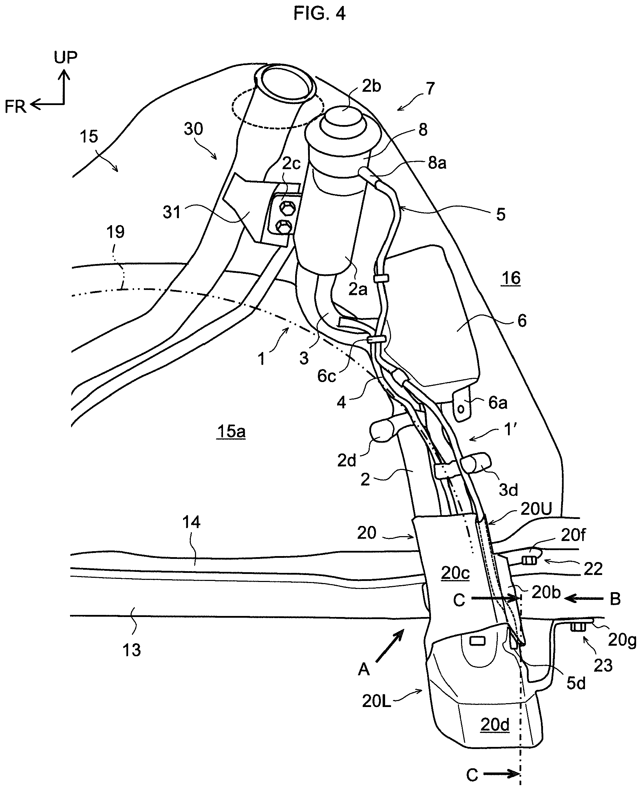

Next, description will be made in relation to arrangement of the filler neck 1 (filler neck assembly 1') and a structure to fix the filler neck 1 (filler neck assembly 1') to the vehicle body. As illustrated in FIG. 2, since the filler inlet 7 is positioned outer side from the side member 13, the filler neck 1 is bent from the side of the side member 13 towards the inner side from the side member 13, passes under the side member 13, and is then connected to the tank 9. Hereinafter, a portion of the filler neck 1 being disposed under the wheel house 15 and also being downwardly bend at the side of the side member 13 to come under the side member 13 is referred to as a bend portion 1a. As illustrated in FIG. 4, the filler neck 1 of the present embodiment downwardly extends from the filler inlet 7 and is arranged along an inner wall 15a of the wheel house 15 at the inner rear portion of the wheel house 15 at the rear side.

The wheel house 15 is a portion formed into an arch shape covering the top face of a wheel 19 (tire), and as illustrated in FIG. 2, is formed by a combination of a wheel house inner 16 (vehicle body) and a wheel house outer 17 (vehicle body), for example. Inside the wheel house 15, a splash shield 18 that conforms to the inner-face shape of the wheel house 15 is provided. The splash shield 18 is a resin molding having high stiffness and high strength, and is fixed to the wheel house 15 with bolts and nuts, vises, and/or clips. The splash shield 18 is disposed closer to the wheel 19 than the wheel house inner 16 and the wheel house outer 17, and functions to protect the vehicle body from pebbles and mud water splashed by the wheel 19.

As illustrated in FIG. 4, the upper end portion of the filler neck 1 is fixed to the vehicle body via the boot 8 and also fixed to a fuel filler neck 30 via brackets 2c and 31. The intermediate portion of the filler neck 1 is arranged along the wheel house inner 16 at the rear and inner portion of the wheel 19 in the wheel house 15, is fixed to the wheel house inner 16 (vehicle body), and is held by a holding member 20. The lower end portion of the filler neck 1 is connected to the tank 9. This means that the holding member 20 of the present embodiment is arranged at a lower and rear portion of the wheel house 15.

The upper end portion of the filler neck 1 of the present embodiment is fixed to the fuel filler neck 30 by fastening the bracket 2c on the side of the filler head 2a to the bracket 31 on the side of the fuel filler neck 30 with a bolt. The intermediate portion of the filler neck 1 is fixed to the vehicle body by fastening a flange 6a integrated with the chamber 6 to the wheel house inner 16 with a bolt and also by fixing the filler horse 2 and the leveling pipe 3 to the wheel house inner 16 respectively by fixing members 2d and 3d.

Furthermore, on the filler neck 1 of the present embodiment, the holding member 20 is mounted so as to cover the bend portion 1a, as illustrated in FIG. 2. Fixing the holding member 20 to the vehicle body allows the bend portion 1a to be held by the vehicle body via the holding member 20. As illustrated in FIG. 4, the upper end portion of the vent horse 4 is supported by a clip 6c integrated with the chamber 6, the intermediate portion of the vent horse 4 is held by the fixing member 3d and the holding member 20, and the lower end portion of the vent horse 4 is connected to the tank 9. The upper end portion of the drain horse 5 is fixed to the boot 8, the lower end portion of the drain horse 5 is fixed to the holding member 20, and the intermediate portion of the drain horse 5 is attached to the vehicle body via the chamber 6 of the filler neck 1.

### [1-2. holding member]

As illustrated in FIG. 2, the holding member 20 is an element that has a function to hold the filler neck assembly 1' on the vehicle body and a function to protect the filler neck assembly 1' from scattering such as pebbles and mud water that may be intruded from the side of the wheel 19. In addition to the above, the holding member 20 protects the filler neck assembly 1' in cases where the wheel 19 itself intrudes inwards.

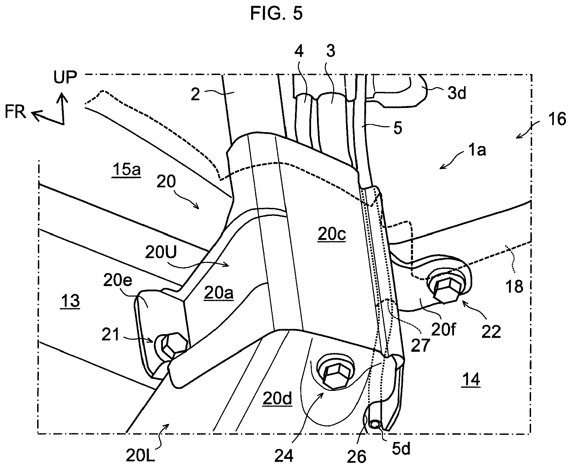

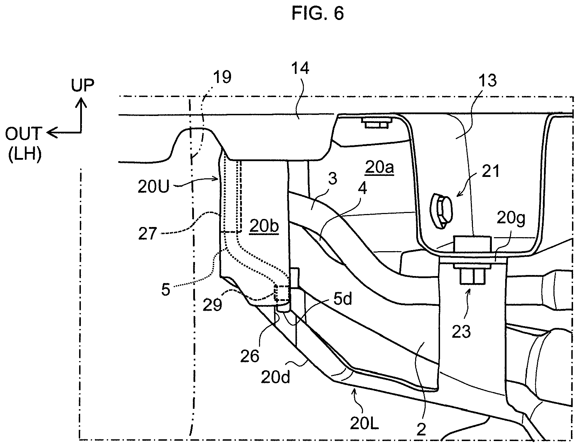

The holding member 20 has a front view (i.e., when being seen from the front) of a substantially L-shape that extends in the vertical direction and has a lower portion bending towards the inner side, and vertically extends between the wheel 19 and bend portion 1a. The filler horse 2, the leveling pipe 3, and the vent horse 4 are routed so as to extend from the upward side to the downward side along the inner face of the holding member 20 and then direct to the inner side. Meanwhile, the drain horse 5 is routed so as to extend from the upward side to the downward side along the inner face of the holding member 20. As illustrated in FIGs. 5 and 6, the drain horse 5 is arranged such that an opening 5d of the lower end portion thereof is positioned at the upward side of the lower face of the holding member 20 and directs the vertically downward. This arrangement prevents the reduction agent drained out of the drain horse 5 from adhering onto the vehicle body.

The holding member 20 of the present embodiment includes a front face portion 20a vertically arranged on a front side of the bend portion 1a of the filler neck 1 and extending along the vehicle width direction, a rear face portion 20b arranged on a rear side of the front face portion 20a and facing the front face portion 20a, a side face portion 20c connecting the outer edges of the front face portion 20a and the rear face portion 20b to each other, and a lower face portion 20d arranged under the bend portion 1a. In addition to the above, the holding member 20 of the present embodiment includes a front flange 20e formed by orthogonally bending the inner edge of the front face portion 20a in the front direction, and an upper flange 20f and a lower flange 20g respectively formed by bending the upper portion and the lower portion of the rear face portion 20b in the rear direction.

The front flange 20e of the holding member 20, being in a state of being in contact with the side face of the side member 13, is fastened in the direction from the outer side to the inner side with a bolt. Hereinafter, this position of the fastening is referred to as a first fastening point 21. Furthermore, the upper side flange 20f of the holding member 20, being in a state of being in contact with the rear floor panel 14, is fastened with a bolt from the downward side, and the lower side flange 2g of the holding member 20, being in a state of being in contact with the lower face of the side member 13, is fastened with a bolt from the downward side. Hereinafter, the former position of the fastening is referred to as a second fastening point 22 and the latter position of the fastening is referred to as a third fastening point 23. Consequently, the holding member 20 of the present embodiment is fastened to the side member 13 at the two fastening points 21 and 23 and is also fastened to the rear floor panel 14 at the fastening point 22.

The holding member 20 of the present embodiment is configured by combining two elements of an upper member 20U and a lower member 20L. The upper member 20U is fixed to the vehicle body, being in a state of being attached to the filler neck 1 beforehand. Meanwhile, the lower member 20L is arranged under the upper member 20U and fixed to the vehicle body after the filler neck assembly 1' and the upper member 20U are fixed to the vehicle body.

The front flange 20e (first fastening point 21) is provided at the front face portion 20a of the upper member 20U, and the upper flange 20f (second fastening point 22) is provided at the rear face portion 20b of the upper member 20U. The lower flange 20g (third fastening point 23) is provided at the rear face portion 20b of the lower member 20L. The holding member 20 of the present embodiment includes a fastening point 24 (hereinafter referred to as "fourth fastening point 24") at which the upper member 20U and the lower member 20L are fastened to each other. The upper member 20U and the lower member 20L, being in a state the lower end portion of the upper member 20U overlies the upper end portion of the lower member 20L from the outer side, are fastened to each other at the forth fastening point 24. In other words, the lower member 20L is fixed both to the side member 13 and the upper member 20U.

As illustrated in FIG. 7, the lower face portion 20d of the holding member 20 of the present embodiment downwardly inclines toward the tank 9. Specifically, the lower face portion 20d of the lower member 20L is obliquely installed so as to downwardly slope from the outer side to the inner side. In the present embodiment, the inclination angle of the lower face portion 20d with respect to the horizontal direction is larger at the both end portions as compared with that of the intermediate portion with respect to the vehicle width direction. As illustrated by the broken line in FIG. 7, the lower face portion 20d of the holding member 20 of the present embodiment is arranged such that an end portion 25 of the lower face portion 20d on the side of the tank 9 locates below a top edge 51 of the tank cover 50 and distantly from the tank cover 50.

As illustrated in FIG. 5, the holding member 20 of the present embodiment is provided with a cylinder member 27 that extends in the vertical direction under a state where the holding member 20 is fixed to the vehicle body. The drain horse 5 is fixed to the holding member 20 by conducting the lower end portion thereof through the cylinder member 27. As illustrated in FIG. 6, the holding member 20 of the present embodiment is provided with a locking claw 29 at a point inward and downward from the cylinder member 27. The locking claw 29 holds a portion of the drain horse 5 near the open end (i.e., the end provided with the opening 5d). The cylinder member 27 and the locking claw 29 are made of resin, and are integrally formed with the holding member 20 (upper member 20U) also made of resin (integral casting). On the rear face portion 20b of the holding member 20 (lower member 20L) of the present embodiment, a recess 26 is formed which extends in the vertical direction and which protrudes towards the front. The lower end portion of the drain horse 5 is arranged along the recess 26.

### [2. Effects]

(1) According to the vehicle body structure described above, since the holding member 20 is mounted on the filler neck 1 and also fixed to the side member 13, the filler neck 1 can be firmly held on the side member 13. The holding member 20, which extends between the wheel 19 and the bend portion 1a, can protect the filler neck 1 (in particular bend portion 1a). This means that the holding member 20 also has a function to protect the filler neck 1 from scattering splashed by the wheel 19 and mud water and the like flung by the wheel 19, so that the filler neck 1 is held and protected without increasing the requisite elements.
(2) The above holding member 20 includes the front face portion 20a vertically arranged on the front side of the bend portion 1a of the filler neck 1 and the lower face portion 20d arranged on the downward side of the bend portion 1a. With this configuration, the holding member 20 can protect the filler neck 1 (in particular bend portion 1a) from the front side and the lower side and enhance the protectability.
(3) Since the lower face portion 20d of the holding member 20 downwardly inclines toward the tank 9, mud water and snow intruded over the lower face portion 20d can be ejected. In the illustrated embodiment, the inclination angle of the lower face portion 20d is set to become the largest on the side of the tank 9, so that the capability of ejecting mud water and snow can be further enhanced.
(4) The above holding member 20 is arranged in such a posture that the end portion 25 of the lower face portion 20d on the side of the tank 9 is positioned under the top edge 51 and distantly from the tank cover 50. This structure can prevent mud water and snow ejected from the lower face portion 20d of the holding member 20 from intruding into a gap between the tank 9 and the top edge 51 of the tank cover 50.
(5) Since the above holding member 20 is configured by combining two elements of the upper member 20U and the lower member 20L, it is possible to enhance the operability of attaching the filler neck 1 (filler neck assembly 1') to the vehicle body. Since the lower member 20L is fixed to the upper member 20U as well as to the side member 13, misalignment between the upper member 20U and the lower member 20L can be avoided.
(6) The upper member 20U and the lower member 20L described above are fixed each other, being in a state where the lower end portion of the upper member 20U overlies the upper end portion of the lower member 20L from the outer side. This structure can prevent mud water from intruding between the upper member 20U and the lower member 20L.

### [3. Miscellaneous]

The above embodiment can be variously modified without departing from the scope of the embodiment, can be selected and omitted if required, and can be appropriately combined.

The structure of the above filler neck 1 is exemplary. For example, the fixing points of the filler neck 1 to the vehicle body are not limited to those described above, and the routes of the pipes 2-5 may be different from those described above. Alternative to the use of the filler neck assembly 1', the filler neck 1 may be fixed to the vehicle body and then the vent horse 4 and the drain horse 5 may be fixed to the filler neck 1 and the vehicle body.

The structure and the fixing points of the above holding member 20 are exemplary and are not limited to those described above. Alternatively, the holding member 20 may be formed of a single element and may be formed from any material. The holding member 20 is satisfactorily fixed at least to the side member 13, and points of the fixing are not limited to the first fixing point 21 and the third fixing point 23 described above. The above fixing points 21 to 23 are exemplary, and the holding member 20 may be fixed at different point(s) and may be fastened to the vehicle body from different directions from those described above.

The shape of the above holding member 20 (the lower member 20L) is exemplary and the inclination angle of the lower face portion 20d and the like can be appropriately determined. The above holding member 20 is provided with the recess 26, the cylinder member 27, and the locking claw 29. Alternatively, claws to hold the pipes 2 to 5 may be provided to the holding member 20 and consequently, the cylinder member 27 and the locking claw 29 may be omitted. The above arrangement of the pipes 2 to 5 are exemplary, and the position of the filler horse 2 with respect to the wheel house inner 16 and the positions of the pipes 2 to 5 with respect to the holding member 20 may be different from those described above.

The above embodiment relates to a reduction system that purifies NOx in the exhaust gas, but the reduction agent is not limited to urea solution. An exhaust-gas purifying system using a selective NOx reducing catalyst sometimes uses ammonia solution in place of urea solution. An exhaust-gas purifying system using a diesel particulate filter sometimes injects hydrocarbon (HC, unburned fuel) into an exhaust pipe in order to encourage particulate matter (PM) to burn. Therefore, the above vehicle body structure can be applied to an exhaust-gas purifying system that supplies ammonia solution or hydrocarbon in place of urea solution.

### REFERENCE SIGNS LIST

1 filler neck
1a bend portion
7 filler inlet
9 tank
10 vehicle
11 outer panel (vehicle body)
13 side member (vehicle body)
14 rear floor panel (vehicle body)
15 wheel house
15a inner wall
16 wheel house inner (vehicle body)
17 wheel house outer (vehicle body)
19 wheel
20 holding member
20a front face portion
20d bottom face portion
20U upper member
20L lower member
25 end portion of the bottom face portion on the side of the tank
50 tank cover
51 top edge

## Claims

1. A vehicle body structure of a vehicle (10) comprising:
a side member (13) that extends in a front-to-rear direction of the vehicle (10);
a tank (9) that is arranged on an inner side from the side member (13) in a width direction of the vehicle (10) and that stores an additive for purifying an exhaust gas;
a filler inlet (7) for the additive that is arranged on an outer side from the side member (13);
a filler neck (1) that connects the filler inlet (7) to the tank (9); and
a holding member (20) that is mounted on the filler neck (1) and that is fixed to the side member (13) at least one point to hold the filler neck (1) to the vehicle (10), wherein:
the filler neck (1) is arranged along an inner wall (15a) of a wheel house (15) from the filler inlet (7) and comprises a bend portion (1a) that is bent from a point under the wheel house (15) and on a side of the side member (13) to a point under the side member (13); and
the holding member (20) extends between a wheel (19) arranged inside the wheel house (15) and the bend portion (1a) of the filler neck (1).

2. The vehicle body structure according to claim 1, wherein the holding member (20) comprises:
a front face portion (20a) that is vertically arranged on a front side of the bend portion (1a) and that extends along the width direction; and
a lower face portion (20d) that is arranged under the bend portion (1a).

3. The vehicle body structure according to claim 2, wherein the lower face portion (20d) of the holding member (20) downwardly inclines toward the tank (9).

4. The vehicle body structure according to claim 2 or 3, further comprising a tank cover (50) that covers a lower portion of the tank (9) from a bottom, wherein the holding member (20) is arranged such that an end portion (25) of the lower face portion (20d) on a side of the tank (9) locates below a top edge (51) of the tank cover (50) and distantly from the tank cover (50).

5. The vehicle body structure according to any one of claims 1 to 4, wherein:
the holding member (20) is configured to be combination an upper member (20U) that is attached to the filler neck (1) beforehand and a lower member (20L) arranged under the upper member (20U); and
the lower member (20L) is fixed to the side member (13) and to the upper member (20U).

6. The vehicle body structure according to claim 5, wherein the upper member (20U) and the lower member (20L) are fixed, being in a state where a lower end portion of the upper member (20U) overlies an upper end portion of the lower member (20L) from the outer side of the vehicle (10).

## Patentansprüche

1. Fahrzeugkarosseriestruktur eines Fahrzeugs (10), aufweisend:
ein Seitenteil (13), das sich in Front-Heck-Richtung des Fahrzeugs (10) erstreckt:
einen Tank (9), der sich auf einer Innenseite des Seitenteils (13) in einer Breitenrichtung des Fahrzeugs (10) erstreckt und ein Additiv zum Reinigen von Abgas speichert;
eine Einfüllöffnung (7) für das Additiv, die an einer Außenseite des Seitenteils (13) angeordnet ist;
einen Einfüllstutzen (1), der die Einfüllöffnung (7) mit dem Tank (9) verbindet; und
ein Halteteil (20), das auf dem Einfüllstutzen (1) montiert und zum Halten des Einfüllstutzens (1) am Fahrzeug (10) an mindestens einem Punkt am Seitenteil (13) befestigt ist, wobei:
der Einfüllstutzen (1) von der Einfüllöffnung (7) aus entlang einer Innenwand (15a) eines Radkastens (15) angeordnet ist und einen gebogenen Abschnitt (1a) aufweist, der von einem Punkt unter dem Radkasten (15) und auf einer Seite des Seitenteils (13) zu einem Punkt unter dem Seitenteil (13) gebogen ist; und
sich das Halteteil (20) zwischen einem im Radkasten (15) angeordneten Rad (19) und dem gebogenen Abschnitt (1a) des Einfüllstutzens (1) erstreckt.

2. Fahrzeugkarosseriestruktur nach Anspruch 1, wobei das Halteteil (20) Folgendes umfasst:
einen Vorderseitenabschnitt (20a), der senkrecht auf einer Vorderseite des gebogenen Abschnitts (1a) angeordnet ist und sich in Breitenrichtung erstreckt; und
einen Unterseitenabschnitt (20d), der unter dem gebogenen Abschnitt (1a) angeordnet ist.

3. Fahrzeugkarosseriestruktur nach Anspruch 2, wobei der Unterseitenabschnitt (20d) des Halteteils (20) zum Tank (9) hin nach unten geneigt ist.

4. Fahrzeugkarosseriestruktur nach Anspruch 2 oder 3, ferner aufweisend eine Tankverkleidung (50), die einen unteren Abschnitt des Tanks (9) von einem Boden aus bedeckt, wobei das Halteteil (20) so angeordnet ist, dass sich ein Endabschnitt (25) des Unterseitenabschnitts (20d) auf einer Seite des Tanks (9) unter einer Oberkante (51) der Tankverkleidung (50) und im Abstand zur Tankverkleidung (50) befindet.

5. Fahrzeugkarosseriestruktur nach einem der Ansprüche 1 bis 4, wobei:
das Halteteil (20) als Kombination aus einem Oberteil (20U), das zuvor am Einfüllstutzen (1) angebracht ist, und einem unter dem Oberteil (20U) angeordneten Unterteil (20L) ausgebildet ist; und
das Unterteil (20L) am Seitenteil (13) und am Oberteil (20U) befestigt ist.

6. Fahrzeugkarosseriestruktur nach Anspruch 5, wobei das Oberteil (20U) und das Unterteil (20L) fest sind und sich in einem Zustand befinden, in dem ein unterer Endabschnitt des Oberteils (20U) einen oberen Endabschnitt des Unterteils (20L) von der Außenseite des Fahrzeugs (10) aus überlagert.

## Revendications

1. Structure de carrosserie de véhicule d'un véhicule (10) comprenant :
un élément latéral (13) qui s'étend dans une direction avant-arrière du véhicule (10) ;
un réservoir (9) qui est agencé sur un côté interne par rapport à l'élément latéral (13) dans une direction de la largeur du véhicule (10) et qui stocke un additif pour purifier un gaz d'échappement ;
une entrée de remplissage (7) pour l'additif qui est agencée sur un côté externe par rapport à l'élément latéral (13) ;
un col de remplissage (1) qui relie l'entrée de remplissage (7) au réservoir (9) ; et
un élément de maintien (20) qui est monté sur le col de remplissage (1) et qui est fixé à l'élément latéral (13) en au moins un point pour maintenir le col de remplissage (1) sur le véhicule (10), dans laquelle :
le col de remplissage (1) est agencé le long d'une paroi interne (15a) d'un logement de roue (15) par rapport à l'entrée de remplissage (7) et comprend une partie courbe (1a) qui est recourbée depuis un point sous le logement de roue (15) et sur un côté de l'élément latéral (13) jusqu'à un point sous l'élément latéral (13) ; et
l'élément de maintien (20) s'étend entre une roue (19) agencée à l'intérieur du logement de roue (15) et la partie courbe (1a) du col de remplissage (1).

2. Structure de carrosserie de véhicule selon la revendication 1, dans laquelle l'élément de maintien (20) comprend :
une partie de face avant (20a) qui est agencée verticalement sur un côté avant de la partie courbe (1a) et qui s'étend le long de la direction de la largeur ; et
une partie de face inférieure (20d) qui est agencée sous la partie courbe (1a).

3. Structure de carrosserie de véhicule selon la revendication 2, dans laquelle la partie de face inférieure (20d) de l'élément de maintien (20) s'incline vers le bas vers le réservoir (9).

4. Structure de carrosserie de véhicule selon la revendication 2 ou 3, comprenant en outre un couvercle de réservoir (50) qui couvre une partie inférieure du réservoir (9) depuis un fond, dans laquelle l'élément de maintien (20) est agencé de telle sorte qu'une partie d'extrémité (25) de la partie de face inférieure (20d) sur un côté du réservoir (9) se situe en dessous d'un bord supérieur (51) du couvercle de réservoir (50) et de manière distante par rapport au couvercle de réservoir (50).

5. Structure de carrosserie de véhicule selon l'une quelconque des revendications 1 à 4, dans laquelle
l'élément de maintien (20) est configuré pour être en combinaison avec un élément supérieur (20U) qui est attaché au col de remplissage (1) au préalable et un élément inférieur (20L) agencé sous l'élément supérieur (20U) ; et
l'élément inférieur (20L) est fixé à l'élément latéral (13) et à l'élément supérieur (20U).

6. Structure de carrosserie de véhicule selon la revendication 5, dans laquelle l'élément supérieur (20U) et l'élément inférieur (20L) sont fixés, dans un état où une partie d'extrémité inférieure de l'élément supérieur (20U) se superpose à une partie d'extrémité supérieure de l'élément inférieur (20L) depuis le côté externe du véhicule (10).
